# EUROPÄISCHE PATENTSCHRIFT

(11) **EP 2 044 726 B1**
(45) Veröffentlichungstag und Bekanntmachung des Hinweises auf die Patenterteilung: **13.01.2010**
(21) Anmeldenummer: 07729328.0
(22) Anmeldetag: 21.05.2007
(51) Int. Cl.: H04L 12/10

(54) **VERFAHREN ZUM VERWALTEN DER VON EINER ZENTRALEN NETZWERKKOMPONENTE ÜBER EINE LEITUNG ÜBERTRAGENEN ENERGIE ZU EINER DEZENTRALEN NETZWERKKOMPONENTE**
METHOD FOR MANAGING THE POWER TRANSMITTED FROM A CENTRAL NETWORK COMPONENT TO A DECENTRALIZED NETWORK COMPONENT VIA A LINE
PROCÉDÉ DE GESTION DE L'ÉNERGIE TRANSMISE SUR UNE LIGNE PAR UN COMPOSANT DE RÉSEAU CENTRAL À UN COMPOSANT DE RÉSEAU DÉCENTRALISÉ

(30) Priorität: 25.07.2006 DE 102006034422
(43) Veröffentlichungstag der Anmeldung: 08.04.2009
(73) Patentinhaber: Gigaset Communications GmbH, 81379 München (DE)
(72) Erfinder: ALMS, Henrik, 18516 Kreutzmannshagen (DE); RICHTER, Frank-Dieter, 17489 Greifswald (DE)
(74) Vertreter: Michalski Hüttermann & Partner Patentanwälte
(86) Internationale Anmeldenummer: PCT/EP2007/054884
(87) Internationale Veröffentlichungsnummer: WO 2008/012120

(56) Entgegenhaltungen:
- US-A1- 2004 263 282
- US-A1- 2005 168 326
- US-A1- 2005 281 326

## Beschreibung

Die Erfindung betrifft ein Verfahren zum Verwalten der von einer zentralen Netzwerkkomponente über eine Leitung übertragenen Energie zu einer dezentralen Netzwerkkomponente gemäß dem Oberbegriff des einzigen Anspruchs.

Es gibt heute eine Technik, die so genannte Power over Ethernet-Technik (PoE-Technik), mit der netzwerkfähige Geräte über das Ethernet-Kabel mit Strom versorgt werden können. Im engeren Sinn ist heute mit PoE meist der IEEE-Standard 802.3af gemeint. Hauptvorteil von PoE ist, dass man ein Stromversorgungskabel einsparen kann und so auch an schwer zugänglichen Stellen oder in Bereichen, in denen viele Kabel stören würden, Ethernet-angebundene Geräte installieren kann. Somit lassen sich einerseits zum Teil drastisch Installationskosten einsparen, andererseits kann der damit einfach zu realisierende Einsatz einer zentralen unterbrechungsfreien Stromversorgung die Ausfallsicherheit der angeschlossenen Geräte erhöhen.

PoE wird von Netzwerkgeräten genutzt, die wenig Leistung verbrauchen. Dies wird typischerweise in IP-Telefonen, kleinen Hubs, Kameras, kleinen Servern oder in schnurlosen Übertragungsgeräten (WLAN-Access-Points, FSO-Geräte, Bluetooth-Access-Points) eingesetzt.

IEEE 802.3af unterteilt die beteiligten Geräte in Energieversorger (PSE, Power Sourcing Equipment) und Verbraucher (PD, Power Devices), die auch als Netzabschlusseinrichtungen beziehungsweise dezentralen Netzwerkkomponenten aufgefasst werden können.

Zur Energieübertragung werden normalerweise die freien Adernpaare im Ethernet-Kabel verwendet. Wenn dies nicht möglich ist, weil zum Beispiel ISDN über die Leitung geführt ist, können auch die signalführenden Adern genutzt werden. Diese Betriebsart muss jedoch sowohl vom PSE als auch vom PD explizit unterstützt werden, da die Spannung in diesem Fall durch den Ethernet-Transceiver hindurch geleitet werden muss.

Die Herausforderung für die Hersteller proprietärer PoE-Lösungen bestand früher darin, Schäden an nicht PoE-fähigen Endgeräten nach Möglichkeit zu vermeiden. Obwohl die Adern 4, 5, 7 und 8 gemäß dem Ethernet-Standard eigentlich nicht belegt sind, bedeutet das nicht, dass es nicht doch Netzwerkkarten oder ähnliches gibt, bei denen die entsprechenden Pins nach irgendwohin durchgeschleift sind. Wenn dort versehentlich Power over Ethernet anliegen sollte, kann dies zu irreparablen Schäden am Gerät führen.

IEEE 802.3af löst dieses Problem durch ein als Resistive Power Discovery bezeichnetes Verfahren. Hierbei legt der Energieversorger zunächst in regelmäßigen Abständen einen nur minimalen Strom auf die Adern, mit dem sich im Normalfall kein Gerät beschädigen lässt. Dabei erkennt er, ob und wo der Energieverbraucher einen 25-kOhm-Abschlusswiderstand besitzt und damit PoE-fähig ist. Daraufhin wird der Verbraucher mit einer geringen Leistung versorgt. Nun muss der Verbraucher signalisieren, zu welcher von mehreren im Standard definierten Leistungsklassen (Class 0 bis Class 4) er gehört. Erst dann bekommt das PD die volle Leistung durch das PSE und kann den Betrieb aufnehmen.

Die spezielle Leistungsklasse für einen Verbraucher ergibt sich aus der maximal aufgenommenen Leistung und kann vom Endgerät während der Klassifikationsphase, wie schon angesprochen, signalisiert werden. Ohne diese Signalisierung wird ein zu speisendes Endgerät der energiesparendsten Klasse, der Klasse 0 (Class 0), zugeteilt.

Die Leistungsabgabe der speisenden Einheit darf laut Standard verwaltet werden, um zu vermeiden, dass jedem Endgerät die volle Leistung zur Verfügung gestellt werden muss. Im einfachsten Fall kann eine Verwaltung so aussehen, dass für alle Ports nur Endgeräte bestimmter Klassen (z. B. Class 1 und Class 2) zulässig sind. Alle anderen werden abgewiesen, um das speisende System nicht zu überlasten.

Abweisen heißt, dass keine Versorgungsspannung für das betreffende PD zur Verfügung gestellt wird.

Eine kompliziertere Leistungsverwaltung könnte gegebene Leistungsreserven nach Bedarf an die Ports verteilen, so dass, wenn die Ressourcen zur Neige gehen, nur noch Endgeräte mitbestimmten Leistungsklassen zugelassen werden. Eine solche Leistungsverwaltung ist in der Patentanmeldung US-A1-2005/281326 beschrieben.

Zu speisende Endgeräte (PDs) können eine Vielfalt von Funktionen beinhalten. Zum Beispiel kann ein VoIP-Telefon als Hauptfunktion die Telefonie über das IP-Protokoll realisieren und zusätzlich diverse Internet-basierte Funktionen bieten, dann Überwachungsaufgaben wahrnehmen, Ausgaben auf Anzeigen oder mit künstlicher Sprache tätigen und so weiter.

Für alle Funktionen zusammen wird die Leistungsaufnahme entsprechend hoch sein. Versucht nun solch ein Endgerät beim Neuanschluss Versorgungsleistung zugeteilt zu bekommen, verhindert die Leistungsverwaltung der speisenden Einheit (PSE) unter Umständen jegliche Stromversorgung, obwohl die Grundfunktion (vielleicht gerade die "lebenswichtige" - Stichwort: "lifeline") ohne Probleme hätte ausgeführt werden können.

Aus dem Dokument DE 199 38 123 C2 ist unter anderem ein Verfahren zum Verwalten der von einer zentralen Netzwerkkomponente über eine Leitung zu einer dezentralen Netzwerkkomponente übertragenen Energie bekannt, bei dem für die der dezentralen Netzwerkkomponente zugeordneten Funktionen jeweils ein Energieverbrauch bestimmt wird, bei dem weiter die Energieübertragungseigenschaften der Leitung gemessen und daraus die in der dezentralen Netzwerkkomponente verfügbare Energie ermittelt werden, und bei dem die Funktionen der dezentralen Netzwerkkomponente von der dezentralen Netzwerkkomponente in Abhängigkeit von der für die dezentrale Netzwerkkomponente zur Verfügung stehenden Energie und dem Energieverbrauch der jeweiligen Funktionen der dezentralen Netzwerkkomponente aktiviert werden.

Mit anderen Worten wird hier die Energieergiebigkeit in Abhängigkeit vom Gleichstromwiderstand der Teilnehmerleitung ermittelt. Dabei werden entsprechende Funktionalitäten ab- oder zugeschaltet und/oder es wird der aktuelle Zustand an ein übergeordnetes System gemeldet.

Aufgabe der vorliegenden Erfindung ist es, ausgehend von einem Verfahren der eingangs genannten Art dieses Verfahren in der Weise zu verbessern, dass die im System zur Verfügung stehende Energie auf einfachere Weise ermittelt und variabler genutzt werden kann.

Diese Aufgabe wird erfindungsgemäß durch ein Verfahren gelöst, das die im kennzeichnenden Teil des einzigen Anspruchs angegebenen Verfahrensschritte aufweist.

Dieses Verfahren beinhaltet, dass das PD die Ergiebigkeit der Energiequelle prüft und zusätzliche Funktionalitäten nur dann freigibt, wenn die PSE genügend Leistung abgeben kann. Der Widerstand der Teilnehmerleitung spielt hierbei keine Rolle mehr. Außerdem erhöht die Einteilung der Endgeräte in Leistungsklassen die Variabilität der zur Verfügung stehenden Energie wesentlich mehr, als es eine Teilnehmerleitung vermag. Weiter kann die standardisierte Testphase ausgenutzt werden, was wesentlich günstiger ist, als ein aufwändiges Mess- und Berechnungsverfahren.

Das PD simuliert nacheinander Endgeräte verschiedener Leistungsklassen und überprüft die Reaktion des PSE darauf.

Dabei sind nur zwei Reaktionen möglich:
a) die PSE gibt die Speisung frei, das heißt, die Speisespannung wird angelegt;
b) die PSE gibt die Speisung nicht frei, das heißt, keine Speisespannung am PD.

Nachdem das PD ermittelt hat, welche Leistungsklassen vom PSE gespeist werden können, entscheidet es, welche Funktionalitäten durch es aktiviert werden beziehungsweise werden können.

Ein vereinfachter Ablauf von Detektion, Klassifikation und Speisung nach IEEE 802.3af kann dabei folgendermaßen realisiert sein:
1. Die PSE legt eine Detektionsspannung an und testet den Strom;
2. Wird eine Endgerätesignatur erkannt (PD vorhanden) erfolgt die Klassifikation;
3. Die PSE legt eine Klassifikationsspannung an;
4. Kann die vom PD angeforderte Leistung bereitgestellt werden, wird die Speisung eingeschaltet;
5. Die PSE überprüft ständig die Anwesenheit des PDs.
6. Ist die Überprüfung negativ, wird die Speisespannung abgeschaltet und der Zyklus beginnt erneut.

Solange kein PC angeschlossen ist, wird die Detektion (Schritt 1) ständig/zyklisch durchgeführt.

Der Ablauf der "Simulation" kann nach folgendem Schema durchgeführt sein:
1. PSE startet die Detektion;
2. PD signiert die Detektionsspannung mit R- (Widerstands-) und C-(Kondensator-) Wert gemäß IEEE 802.3af;
3. PSE startet Klassifikation;
4. PD fordert eine Leistungsklasse durch Simulieren einer R- und C-Last gemäß IEEE 802.3af.

Wenn das PSE die Leistung nicht erbringen kann:
5. PSE schaltet keine Speisung zu;
6. PSE beginnt wieder mit dem nächsten Detektionszyklus, das PD fordert dann die nächste Leistungsklasse an.

Wenn das PSE die Leistung erbringen kann und das PD will eine andere Klasse testen:
5. PSE schaltet Speisung ein;
6. PD wird hochohmig;
7. PSE schaltet Speisung aus und beginnt wieder mit dem Detektionszyklus.

Wenn das PSE die Leistung erbringen kann und das PD damit zufrieden ist:
5. PSE schaltet Speisung ein;
6. PD zieht Strom.

Das PD kann die Leistungsklassen in beliebiger Reihenfolge testen. Die Zeiten für die einzelnen Schritte ergeben sich aus der Einschalt-, Mess- und Abschaltzeit, wie sie in der IEEE 802.3af festgelegt sind.

Mit den vorgenannten Maßnahmen kann ein Leistungsmanagement unterstützt werden. Das Endgerät passt sich automatisch an. Es nimmt nur soviel Ressourcen in Anspruch, wie eine Zuteilung möglich ist.

Nachfolgend wird ein Ausführungsbeispiel der Erfindung an Hand einer Zeichnung näher erläutert. Darin zeigen:
- Figur 1: ein Blockschaltbild eines VoIP-Telefons als Bei- spiel für ein CPE beziehungsweise PD gemäß der Er- findung, und
- Figur 2: eine Schaltungsvariante für einen Eingangsteil ei- nes CPEs beziehungsweise PDs gemäß der Figur 1.

CPE (Customer Premises Equipment) bezeichnet ein Teilnehmer-Endgerät in einem Computernetz, einem Telefonnetz oder bei Telefonanlagen. Diese Endgeräte gehören in der Regel dem Endverbraucher oder Kunden und sind an ein Fernsprech- oder Datennetz (Internet oder LAN) angeschlossen. Telefone, Faxgeräte und Modems sind die häufigsten CPE-Geräte. CPE steht daher synonym für PD.

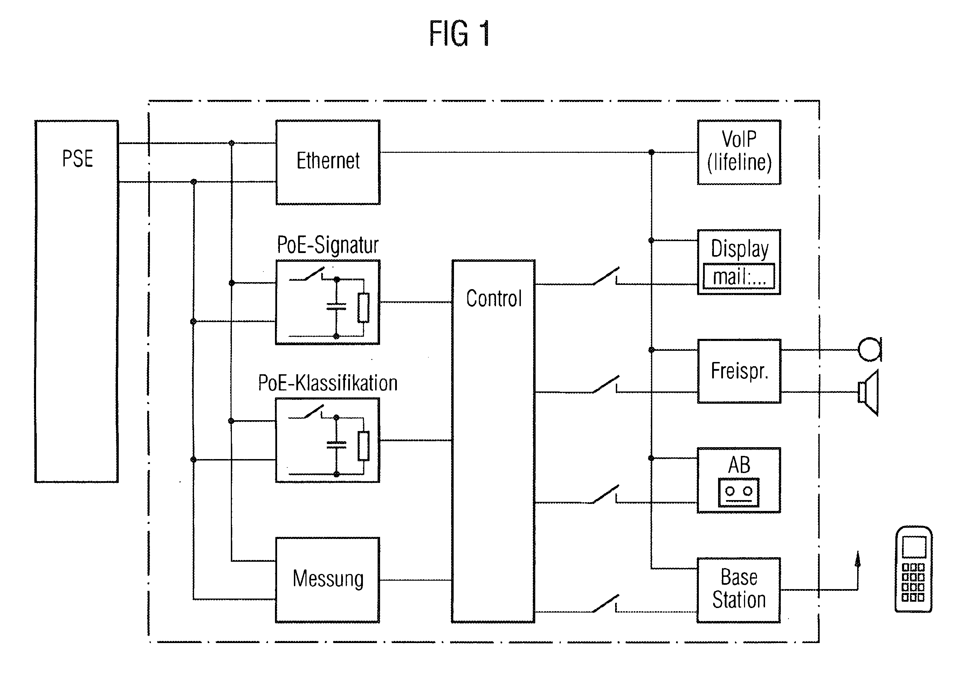

Figur 1 zeigt in Prinzipdarstellung ein VoIP-Telefon (Voice over Internetprotocoll) mit integrierten Zusatzfunktionen. Das VoIP-Telefon wird im Normalfall aus dem Niederspannungsnetz mit Leistung versorgt. Falls das Niederspannungsnetz ausfällt, kann das Telefon, je nach Speisungsleistung von der PSE, einen Teil der Funktionen aufrechterhalten.

Bei verloren gegangener Speisungsleistung aus dem Niederspannungsnetz für das VoIP-Telefon führt das VoIP-Telefon das oben beschriebene Verfahren durch und prüft damit, welche maximale Leistungsklasse von der noch vorhandenen, ebenfalls speisenden Einheit PSE noch unterstützt wird. Dazu prägt das Telefon zum Beispiel erst die Klassifizierungsströme der höchsten Leistungsklasse (z. B. Class 3) während der Klassifikationsphase auf. Gibt die PSE danach die Speisung frei, das heißt, legt sie eine Speisespannung an, so kann die Testphase abgeschlossen und alle verfügbaren Funktionen aktiviert werden. Erfolgt keine Speisung durch die PSE, testet das Telefon die nächste niedrigere Leistungsklasse (Class 2). Wird diese von der PSE durch Anlegen der Speisespannung bestätigt, kann wenigstens noch das Display und ein Nachrichtendienst zusätzlich zum eigentlichen Telefonieren über das Internet-Protokoll aktiviert werden. Die Freisprecheinrichtung und die Bedienung eines mobilen Telefons können nicht mehr versorgt werden. Scheitert auch dieser Test und kann lediglich die niedrigste Leistungsklasse (Class 1) von der PSE bedient werden, wird eben nur das Telefonieren ermöglicht. So kann bei einer Speisung wenigstens ein Notruf (lifeline service) abgesetzt werden.

Als weitere Implementationsbeispiele können genannt werden: Wireless Access Points ohne eigene Stromversorgung (z. B. kann die Sendeleistung variiert werden) und Sensoren in der Automatisierungstechnik, die mittels PoE versorgt werden.

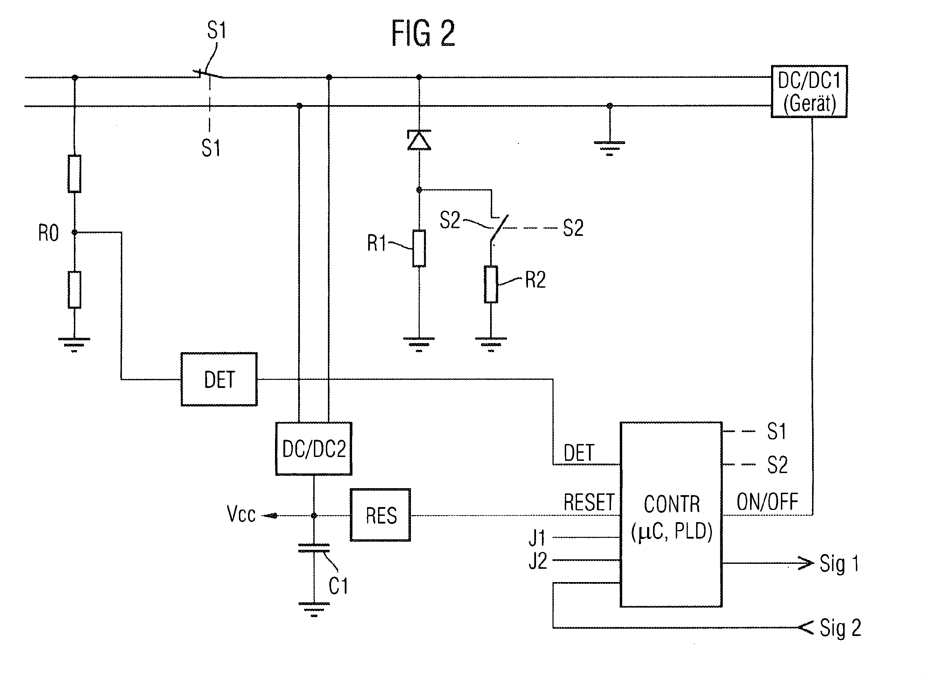

In der Figur 2 ist eine detailliertere Schaltungsvariante für einen entsprechenden CPE- beziehungsweise PD-Eingangsteil dargestellt.

Das in der Figur 2 gezeigte CPE-Gerät ist ein IP-Telefon, das zwei mögliche Leistungsaufnahme aufweist. Mit voller Leistungsversorgung (Class 3) unterstützt das IP-Telefon eine Anzahl von Funktionen. Bei eingeschränkter Leistungsversorgung (Class 2) unterstützt das gezeigte IP-Telefon immer noch einen lifeline-service.

Die schattierten Schaltungsteile in der Figur 2 sind für die automatische Erkennung zusätzlich notwendig. Die Einkopplung an RJ45 und Graetz-Brücke fehlen.

Die einzelnen in der Figur 2 aufgezeigten Schaltungsteile/Signale haben folgende Bedeutung:
- R0: Spannungsteiler, realisiert Mindeststrom für die Detektion;
- R1: Klassifizierungsstrom für Class 2;
- R2: Klassifizierungsstrom für Class 3;
- D1: Z-Diode entsprechend der Prüfspannung;
- S1: "Öffner" (zum Beispiel depletion FET), trennt CPE von Speisung;
- S2: "Schließer" (z. B. enh. FET), schaltet R2 zu;
- C1: Energiespeicher (zum Beispiel Kondensator);
- CONTR: low-cost controller/PLD, enthält die state-machine;
- DC/DC1: Stromversorgung für das CPE, schaltbar;
- ON/OFF: schaltet DC/DC1;
- DC/DC2: Stromversorgung für Control-Einheit;
- DET: Spannungserkennung;
- RES: Reset-Controller;
- Sig1: signalisiert dem CPE-Prozessor, welche Leistungs- klasse zur Verfügung steht;
- Sig2: der CPE-Prozessor erzwingt default-Zustand;
- J1, J2: optionale Jumper;
- VCC: Stromversorgung.

Im stromlosen Zustand (default) ist die Schaltung so bemessen, dass sich das Gerät als Class 2 anmeldet. Der Ablauf ist völlig normal, bis das PSE die Speisung einschaltet. DC/DC1 wird aber noch im "Off" gehalten. Über DC/DC2 wird jetzt der Energiespeicher geladen. RES sorgt für den definierten Anlauf, das heißt, CONTR "weiß", dass eine Emulation neu gestartet wird.

Nachdem C1 geladen ist, schaltet CONTR S1 aus. Das PSE erkennt die Abtrennung und beginnt nach einer Weile eine neue Detektions-/Klassifizierungs-Prozedur. DET erkennt und signalisiert dies an CONTR. S2 ist dieses Mal eingeschaltet, so dass das CPE einen Prüfstrom entsprechend Class 3 prägt. Schaltet das PSE die Speisung ein (Class 3 kann gespeist werden), gibt CONTR die Stromversorgung DC/DC1 frei. Wenn nicht (nur Leistung für Class 2 angeboten), wird S2 geöffnet und beim nächsten Anlauf gibt sich CONTR mit Class 2 zufrieden.

Der Energiespeicher muss so bemessen sein, dass ein "Klassifizierungszyklus" überbrückt werden kann. Dieser "Zyklus" ist die Zeit, innerhalb derer das PSE eine neue Klassifizierungs-prozedur beginnt, nachdem S1 geöffnet wurde.

Die Bemessung des Energiespeichers richtet sich also nach der Länge des Zyklusses und nach der Stromaufnahme des Control-Blockes. Mit einem stromsparenden Mini-Controller und einem mittelgroßen Kondensator sollte 1 Minute kein Problem darstellen.

Eine dauerhafte Versorgung, zum Beispiel durch einen Akkumulator, um diverse Zustände zu speichern, ist nicht vorgesehen. Wenn das eine Anwendung erfordert, könnte ein EEPROM/FLASH die Daten halten.

Ist nach einer Weile C1 entladen, sorgt RES für einen definierten Anlauf. DET erkennt in jedem Falle einen Ausfall der Speisespannung, so dass CONTR auch von sich aus den default-Zustand einnehmen kann.

Der Sonderfall, dass CPE im Status "Class 2" ist und das PSE mehr Versorgungsleistung zur Verfügung stellen kann, kann eintreten, wenn das PSE ein Power-Management-System verwendet. Es ist in der Verantwortung des CPE-Prozessors, bei Bedarf einen neuen Zyklus zu starten. Über Sig2 wird CONTR veranlasst, neu zu starten. Beim IP-Telefon kann das z. B. nach einem beendeten Gespräch angelassen werden.

In einem anderen Sonderfall hat das PSE ein Power-Management, das zur Automatik nicht konform ist. Hierzu ist zu sagen, dass der Standard nicht alle Situationen hundertprozentig definiert. Über die Jumper (J1, J2) kann ein bestimmtes Verhalten von CONTR erzwungen werden (z. B. Class 2 only).

In einem weiteren Sonderfall unterstützt das PSE nur Class 0. Die Klassifizierungsprozedur kann nach IEEE 802.3af dann auch entfallen. DET erkennt in jedem Fall die Speisung und jede andere Leistungsklasse ist eine Untermenge von Class 0.

## Patentansprüche

1. Verfahren zum Verwalten der von einer zentralen Netzwerkkomponente über eine Leitung übertragenen Energie zu einer dezentralen Netzwerkkomponent (PSE), die abhängig von der angebotenen Energie unterschiedliche Funktionalitäten einstellen kann, denen jeweilig ein jeweiliger Energieverbrauch zu Grunde gelegt ist und die in weiterer Folge dafür verantwortlich sind, dass die dezentrale Netzwerkkomponente (PSE) in eine entsprechende Leistungsklasse einzuordnen ist,
**dadurch gekennzeichnet, dass**
durch eine betreffende dezentrale Netzwerkkomponente (PSE) nacheinander dezentrale Netzwerkkomponenten verschiedener Leistungsklassen simuliert werden und dabei jeweils abgeprüft wird, ob die für die Energieübertragung verantwortliche zentrale Netzwerkkomponente eine dezentrale Netzwerkkomponente der simulierten Art unterstützt, und dass nach der Ermittlung der von der zentralen Netzwerkkomponente unterstützten Leistungsklassen durch die betreffende dezentrale Netzwerkkomponente (PSE) die betreffende dezentrale Netzwerkkomponente (PSE) entscheidet, welche in ihr implementierten Funktionalitäten aktiviert werden.

## Claims

1. Method for management of the energy which is transmitted from a central network component via a line to a decentralized network component (PSE), which can set different functionalities depending on the energy offered, each of which is based on a respective energy consumption, and which are then responsible for ensuring that the decentralized network component (PSE) can be classified in an appropriate power class
**characterized in that**
decentralized network components in different power classes are simulated successively by one relevant decentralized network component (PSE), and in this case a check is in each case carried out to determine whether the central network component which is responsible for the energy transmission supports a decentralized network component of the simulated type, and **in that**, after the relevant decentralized network component (PSE) has determined the power class supported by the central network component, the relevant decentralized network component (PSE) decides which functionalities implemented in it will be activated.

## Revendications

1. Procédé de gestion de l'énergie transmise par l'intermédiaire d'une ligne par un composant de réseau central à un composant de réseau décentralisé (PSE), qui peut régler en fonction de l'énergie offerte des fonctionnalités différentes, dont respectivement une consommation d'énergie respective est prise comme base et qui sont ultérieurement responsables de ce que le composant de réseau décentralisé (PSE) soit classé dans une classe de puissance correspondante,
**caractérisé en ce que**
par l'intermédiaire d'un composant de réseau décentralisé (PSE) correspondant, des composants de réseau décentralisés à classes de puissance différentes sont simulés les uns après les autres et qu'il est ainsi respectivement contrôlé si le composant de réseau central responsable de la transmission d'énergie soutient un composant de réseau décentralisé de la manière simulée, et **en ce que** après la détermination des classes de puissance soutenues par le composant de réseau central par l'intermédiaire du composant de réseau décentralisé (PSE) concerné, le composant de réseau décentralisé concerné (PSE) décide quelles fonctionnalités qu'il implémente sont activées.
